# FASCICULE DE BREVET EUROPEEN

(11) **EP 3 815 239 B1**
(45) Date de publication et mention de la délivrance du brevet: **18.02.2026**
(21) Numéro de dépôt: 19732705.9
(22) Date de dépôt: 27.06.2019
(51) Int. Cl.: H02P 6/182, H02P 6/20

(54) **MOTEUR ELECTRIQUE A COURANT CONTINU SANS BALAI ET PROCEDE DE COMMANDE ASSOCIE**
BÜRSTENLOSER GLEICHSTROMMOTOR UND ZUGEHÖRIGES STEUERVERFAHREN
BRUSHLESS DC MOTOR AND ASSIOCATED COMMANDS METHOD

(30) Priorité: 29.06.2018 FR 1856031
(43) Date de publication de la demande: 05.05.2021
(73) Titulaire: Valeo Systèmes d'Essuyage, 78322 Le Mesnil Saint Denis (FR)
(72) Inventeur: HERRADA, Jose-Luis, 78322 LE MESNIL SAINT DENIS (FR)
(74) Mandataire: Valeo Visibility
(86) Numéro de dépôt international: PCT/EP2019/067257
(87) Numéro de publication internationale: WO 2020/002559

(56) Documents cités:
- CN-A- 103 199 778
- DE-A1- 102016 102 329
- FR-A1- 3 056 360
- YU LIU ET AL: "Sensorless control of BLDC motor from zero to low speed based on rotor saliency", 2014 IEEE CONFERENCE AND EXPO TRANSPORTATION ELECTRIFICATION ASIA-PACIFIC (ITEC ASIA-PACIFIC), 1 August 2014 (2014-08-01), pages 1 - 7, XP055556752, DOI: 10.1109/ITEC-AP.2014.6940933
- P.P. ACARNLEY ET AL: "Review of position-sensorless operation of brushless permanent-magnet machines", IEEE TRANSACTIONS ON INDUSTRIAL ELECTRONICS., vol. 53, no. 2, 1 April 2006 (2006-04-01), USA, pages 352 - 362, XP055556923, ISSN: 0278-0046, DOI: 10.1109/TIE.2006.870868

## Description

La présente invention concerne un moteur électrique à courant continu sans balai destiné notamment à des équipements de véhicule automobile.

De nombreux moteurs électriques à courant continu sans balai sont utilisés dans les équipements de véhicules automobiles notamment dans les motoréducteurs des dispositifs d'essuyage.

Les moteurs électriques à courant continu sans balai peuvent présenter de nombreux avantages comme une grande durée de vie, un encombrement et une consommation réduits.

Cependant, la commande des moteurs électriques, telle que divulguée dans les documents "Sensorless control of BLDC motor from zero to low speed based on rotor saliency",2014 IEEE CONFERENCE AND EXPO TRANSPORTATION ELECTRIFICATION ASIA-PACIFIC (ITEC ASIA-PACIFIC),"Review of position-sensorless operation of brushless permanent-magnet machines",IEEE TRANSACTIONS ON INDUSTRIAL ELECTRONICS., vol. 53, no. 2, 1 avril 2006, DE 10 2016 102329 A1, CN 103 199 778 A ou FR 3 056 360 A1, est plus complexe par rapport aux moteurs électriques à balais car pour permettre un bon fonctionnement il est nécessaire de connaître précisément la position angulaire du rotor du moteur électrique à courant continu sans balai. En effet, de tels moteurs électriques comprennent des bobines d'excitation électromagnétique disposées au niveau du stator et alimentées alternativement via un onduleur pour permettre l'entraînement d'aimants permanents disposés sur le rotor.

Or, afin de pouvoir commuter les interrupteurs de l'onduleur et donc l'alimentation des bobines électromagnétiques à des instants optimaux pour obtenir l'entraînement désiré du rotor, il convient de connaître la position du rotor au moins par secteurs avec quelques points précis lors de la commutation d'état (en général pour une excitation trapézoïdale, six commutations à chaque tour du rotor).

De plus, au moment du démarrage il est nécessaire de connaître la position du rotor de manière à pouvoir appliquer un signal d'excitation adéquat. Il est possible d'utiliser un capteur de position dédié mais cela représente un coût supplémentaire.

Il convient donc de trouver une solution économique permettant de détecter la position du rotor au moment du démarrage.

A cet effet, la présente invention concerne un procédé de commande d'un moteur électrique à courant continu sans balai selon l'objet de la revendication 1 et au dispositif de la revendication 8.

Le procédé peut également comprendre au moins l'un des aspects suivants :
- ledit moteur électrique est un moteur électrique à concentration de flux,
- lesdits aimants permanents sont intégrés (ou encore encastrés ou enterrés) dans un corps en matériau ferromagnétique,
- le capteur à effet Hall est associé à un aimant de commande couplé au rotor, ledit aimant de commande comprenant un nombre de paire de pôles égal à trois fois le nombre de paire de pôles du moteur électrique,
- une première étape préliminaire de détermination des signaux d'excitation à appliquer aux bobines en fonction de la position du rotor (3) pour entraîner le rotor (3) en rotation,
- une deuxième étape préliminaire de détermination des valeurs de la grandeur électrique associées à différentes positions du rotor (3).

Les bobines forment trois phases disposées en étoile et la mesure de la grandeur électrique comprend les étapes suivantes :
- on applique une tension prédéterminée entre les bobines associées à une première et une deuxième phase, on mesure la tension au niveau de la deuxième ou de la troisième phase, on compare la valeur de la tension mesurée à la moitié de la valeur de la tension appliquée et on déduit une valeur relative entre les inductances associées à la première et à la deuxième phase,
- on applique une tension prédéterminée entre les bobines associées à la première et la troisième phase, on mesure la tension au niveau de la troisième ou de la deuxième phase, on compare la valeur de la tension mesurée à la moitié de la valeur de la tension appliquée et on déduit une valeur relative entre les inductances associées à la première et à la troisième phase,
- on applique une tension prédéterminée entre les bobines associées à la deuxième et la troisième phase, on mesure la tension au niveau de la troisième ou de la première phase, on compare la valeur de la tension mesurée à la moitié de la valeur de la tension appliquée et on déduit une valeur relative entre les inductances associées à la deuxième et à la troisième phase,
et on détermine la position du rotor à partir des valeurs relatives des inductances associées aux différentes phases et de la valeur du signal transmis par le capteur à effet Hall.

Les bobines forment trois phases disposées en étoile et la mesure de la grandeur électrique comprend les étapes suivantes :
- on applique une tension prédéterminée entre les bobines associées à une première et une deuxième phase et on mesure une première tension au niveau de la deuxième phase,
- on applique la même tension prédéterminée entre les bobines associées à la première et la deuxième phase mais avec un courant inverse et on mesure une deuxième tension au niveau de la deuxième phase,
- on compare les valeurs de la première et de la deuxième tension mesurée et on déduit une valeur relative des inductances associées à la première et la deuxième phase,
- on applique une tension prédéterminée entre les bobines associées à la première et une troisième phase et on mesure une troisième tension au niveau de la troisième phase,
- on applique la même tension prédéterminée entre les bobines associées à la première et la troisième phase mais avec un courant inverse et on mesure une quatrième tension au niveau de la troisième phase,
- on compare les valeurs de la troisième et de la quatrième tension mesurée et on déduit une valeur relative des inductances associées à la première et la troisième phase,
- on applique une tension prédéterminée entre les bobines associées à la deuxième et la troisième phase et on mesure une cinquième tension au niveau de la troisième phase,
- on applique la même tension prédéterminée entre les bobines associées à la deuxième et la troisième phase mais avec un courant inverse et on mesure une sixième tension au niveau de la troisième phase,
- on compare les valeurs de la cinquième et de la sixième tension mesurée et on déduit une valeur relative des inductances associées à la deuxième et à la troisième phase,
et on détermine la position du rotor à partir des valeurs relatives des inductances associées aux différentes phases et de la valeur du signal transmis par le capteur à effet Hall.

La durée d'application des tensions prédéterminées est choisie dans un intervalle de temps compris entre 1 et 50µs, de préférence entre 3 et 10µs.

Le moteur électrique comprend trois phases et un cycle du rotor peut être divisé en six portions angulaires associées respectivement à six signaux d'excitation, trois portions angulaires correspondant à un premier niveau de signal du capteur à effet Hall et trois autres portions angulaires correspondant à un deuxième niveau de signal du capteur à effet Hall, la détermination de la portion angulaire, parmi les trois correspondant au signal du capteur à effet Hall, correspondant à la position du rotor étant réalisée à partir de la mesure de la grandeur électrique.

Le procédé de commande comprend six signaux d'excitation, chaque signal d'excitation correspondant à l'alimentation d'une première phase par une tension positive, l'alimentation d'une deuxième phase par une tension négative et une troisième phase reliée à une masse ou ouverte.

La présente invention concerne également un moteur électrique à courant continu sans balai comprenant :
- un rotor comprenant des aimants permanents,
- un stator présentant des bobines d'excitation électromagnétique,
- au moins un capteur à effet Hall, de préférence un seul capteur à effet Hall, configuré pour détecter des positions angulaires prédéterminées du rotor,
- une unité de commande configurée pour appliquer des signaux d'excitation prédéterminés aux bobines en fonction de la position du rotor pour entraîner le rotor en rotation, ladite unité de commande étant également configurée lors du démarrage pour :
- mesurer une grandeur électrique au niveau d'au moins une bobine, ladite grandeur électrique variant en fonction de la position du rotor,
- déterminer la position du rotor en fonction de la valeur de la grandeur électrique mesurée,
- appliquer un signal d'excitation prédéterminé associé à la position du rotor déterminée,
- appliquer ensuite une séquence prédéterminée de signaux d'excitation à chaque changement d'état du capteur à effet Hall.

Selon un autre aspect de la présente invention, ledit moteur électrique est un moteur électrique à concentration de flux.

Selon un autre aspect de la présente invention, lesdits aimants permanents sont intégrés (ou encore encastrés ou enterrés) dans un corps en matériau ferromagnétique.

Selon un autre aspect de la présente invention, le capteur à effet Hall est associé à un aimant de commande couplé au rotor, ledit aimant de commande comprenant un nombre de paire de pôles égal à trois fois le nombre de paire de pôles du moteur électrique.

D'autres caractéristiques et avantages de l'invention ressortiront de la description suivante, donnée à titre d'exemple et sans caractère limitatif, en regard des dessins annexés sur lesquels :
- les figures 1 et 2 représentent des schémas d'une partie d'un moteur électrique,
- la figure 3 représente un schéma des signaux de commande à appliquer aux phases du moteur électrique en fonction de la position du rotor,
- la figure 4 représente un schéma d'un capteur à effet Hall associé à un aimant de commande,
- la figure 5 représente le signal fourni par un capteur à effet Hall en fonction de la position du rotor,
- la figure 6 représente les valeurs des inductances des phases et le signal fourni par le capteur à effet Hall en fonction de la position du rotor,
- la figure 7 représente un schéma des phases du moteur électrique, des tensions à appliquer et à mesurer pour déterminer la valeur relative des inductances de deux phases selon un premier mode de réalisation,
- la figure 8 représente un schéma des phases du moteur électriques, des tensions à appliquer et à mesurer pour déterminer la valeur relative des inductances de deux phases selon un deuxième mode de réalisation,
- la figure 9 représente un schéma des phases du moteur électriques, des tensions à appliquer et à mesurer pour déterminer la valeur relative des inductances de deux phases selon un troisième mode de réalisation,
- la figure 10 représente un schéma des phases du moteur électriques, des tensions à appliquer et à mesurer pour déterminer la valeur relative des inductances de deux phases selon un quatrième mode de réalisation,
- la figure 11 représente un organigramme des étapes du procédé de détermination des inductances relatives des phases selon la présente invention,
- la figure 12 représente un organigramme des étapes du procédé de démarrage d'un moteur électrique selon la présente invention.

Sur toutes les figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

La présente invention concerne un moteur électrique à courant continu sans balais, par exemple un moteur électrique utilisé dans des équipements de véhicules automobiles comme les motoréducteurs des dispositifs d'essuyage. La présente invention concerne notamment le procédé de démarrage d'un tel moteur électrique.

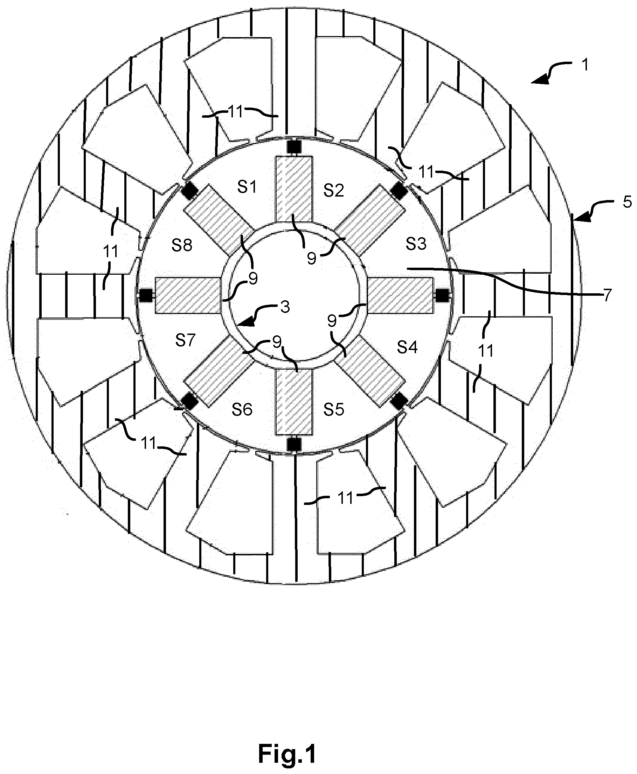

La figure 1 représente une vue schématique partielle d'un moteur électrique 1 à aimants intégrés (ou encore encastrés ou enterrés) comprenant un rotor 3 et un stator 5. Le moteur électrique 1 comprend un rotor 3 muni d'au moins deux paires de pôles, quatre dans le cas présent. Les paires de pôles sont réalisées par un corps 7 comprenant des sections notées S1...S8 en matériau ferromagnétique, lesdites sections S1...S8 définissant des logements régulièrement répartis angulairement entre les différentes sections S1...S8. Les logements sont configurés pour recevoir des aimants permanents 9. Dans le cas présent, les aimants permanents 9 sont au nombre de huit disposés tous les 45° mais un rotor 3 comprenant un nombre de sections S1...S8 et d'aimants permanents 9 différent est également possible. Les logements peuvent aussi avoir une répartition différente et non régulière. Les sections S1...S8 du corps 3 disposées entre deux aimants permanents 9 forment un pôle destiné à interagir avec des bobines (non représentées) du stator 5. Un tel rotor 3 est appelé rotor 3 à aimants intégrés (ou encore encastrés ou enterrés).

Le stator 5 présente une pluralité de dents 11 autour desquelles sont enroulées des spires formant des bobines d'excitation électromagnétique. Les spires sont par exemple réalisées à partir d'un fil de cuivre. Ces bobines forment les phases du moteur et leur alimentation permet la mise en rotation du rotor 3.

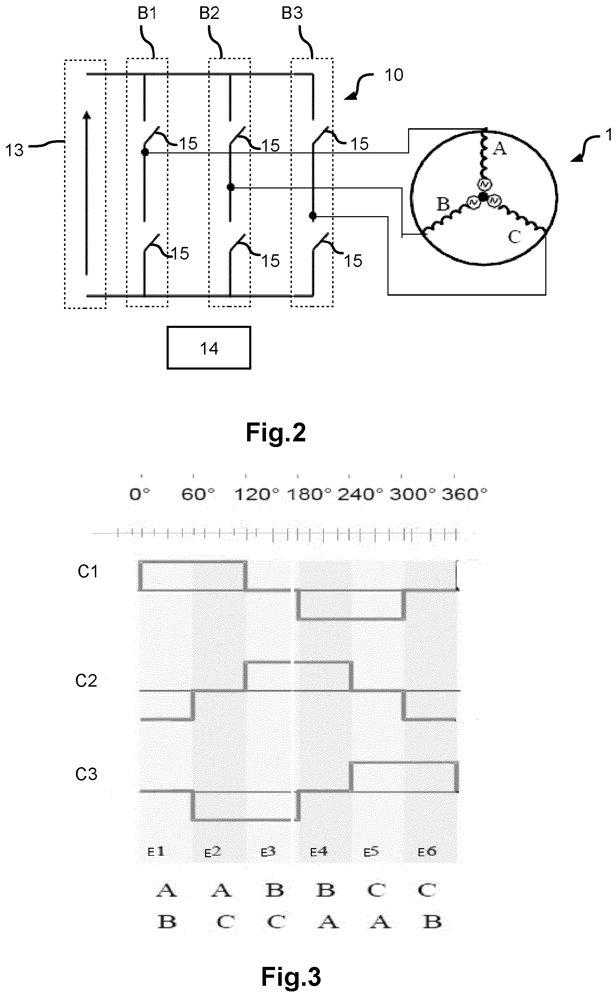

Afin d'obtenir la rotation désirée du rotor 3, il convient d'appliquer une séquence prédéfinie de signaux d'excitation. Dans le cas d'un moteur électrique 1 comprenant trois phases, la séquence prédéfinie comprend six états d'excitation distincts (dans le cas d'une excitation trapézoïdale). Ces signaux d'excitation sont par exemple appliqués par un onduleur 10 tel que représenté sur la figure 2 comprenant trois branches notées B1, B2 et B3 disposées en parallèle et reliées à une source de tension 13. Chaque branche B1, B2, B3 comprend deux interrupteurs 15 disposés en série et commandés par une unité de commande 14. Les points milieux de chaque branche B1, B2, B3 sont reliés respectivement à une phase du moteur électrique 1.

Les différents états d'excitation du moteur électrique 1 lors d'un cycle du rotor 3 sont représentés sur la figure 3 et sont définis par les signaux de commande associés respectivement aux trois phases et notés C1, C2 et C3.

Le premier état E1 correspond à l'application d'une tension positive V+ sur la phase A, d'une tension négative V- sur la phase B et l'application d'une tension nulle sur la phase C. L'application d'une tension nulle est par obtenue en ouvrant un interrupteur relié à la phase C ou en reliant la phase C à la masse.

Le deuxième état E2 correspond à l'application d'une tension positive V+ sur la phase A, d'une tension négative V- sur la phase C et l'application d'une tension nulle sur la phase B.

Le troisième état E3 correspond à l'application d'une tension positive V+ sur la phase B, d'une tension négative V- sur la phase C et l'application d'une tension nulle sur la phase A.

Le quatrième état E4 correspond à l'application d'une tension positive V+ sur la phase B, d'une tension négative V- sur la phase A et l'application d'une tension nulle sur la phase C.

Le cinquième état E5 correspond à l'application d'une tension positive V+ sur la phase C, d'une tension négative V- sur la phase A et l'application d'une tension nulle sur la phase B.

Le sixième état E6 correspond à l'application d'une tension positive V+ sur la phase C, d'une tension négative V- sur la phase B et l'application d'une tension nulle sur la phase A.

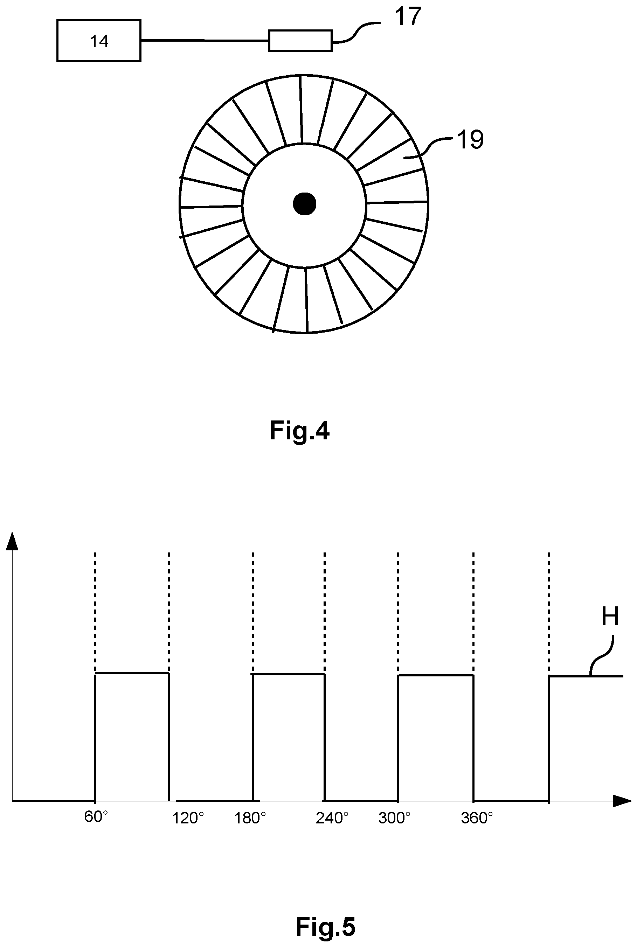

De plus, afin d'obtenir la rotation désirée du rotor 3, il convient de connaître précisément la position du rotor 3 afin de changer l'état des interrupteurs 15 de l'onduleur 10 au moment prédéterminé pour assurer une commutation à l'instant désiré. Dans notre cas, il convient de déterminer la position du rotor 3 de manière précise tous les 60° électriques puisqu'il y a six commutations pour 360° électriques. L'état E1 doit par exemple être appliqué lorsque le rotor 3 est positionné dans une portion angulaire correspondant à un angle compris entre 0 et 60°. Pour obtenir, la position du rotor 3 tous les 60°, un capteur à effet Hall 17, représenté sur la figure 4, est utilisé. Le capteur à effet Hall 17 est par exemple couplé à un aimant de commande 19 solidaire du rotor 3 et comprenant un nombre de pôles égal à trois fois le nombre de pôles du moteur électrique 1, par exemple vingt-quatre pôles pour un moteur comprenant huit pôles. La figure 5 représente un exemple du signal H fourni par le capteur à effet Hall 17 en fonction de l'angle de rotation du rotor 3. Le changement d'état du capteur à effet Hall 17 s'opère tous les 60° électriques de sorte que l'unité de commande 14 peut utiliser le signal fourni par le capteur à effet Hall 17 pour provoquer la commutation à l'instant désiré.

Cependant, afin d'appliquer la bonne séquence de signaux au moment du démarrage, il convient de connaître la position du rotor 3 au moment du démarrage. Or, le capteur à effet Hall 17 ne permet pas de connaître cette position et ne permet pas de déterminer le signal d'excitation à appliquer au démarrage.

Pour cela, il est possible d'utiliser la mesure d'une grandeur électrique dont la valeur varie en fonction de la position du rotor 3. Cette grandeur correspond par exemple à une inductance de la ou des bobine(s) d'excitation associées à au moins une phase du moteur électrique 1 ou à une inductance mutuelle entre deux bobines d'excitation correspondant à deux phases du moteur électrique 1. En effet, la valeur de l'inductance varie en fonction de la position du rotor 3 de sorte que la valeur de l'inductance peut être utilisée pour déterminer la position du rotor 3 lors du démarrage. De plus, cette mesure peut être combinée avec l'état du capteur à effet Hall 17 fourni par le signal H dans le cas ou la valeur de la mesure de l'inductance correspondant à deux positions différentes possibles du rotor 3. Concernant l'inductance mutuelle, les différentes valeurs d'inductance mutuelle peuvent être comparées, par exemple par une mesure relative et les valeurs relatives peuvent être combinées avec l'état du capteur à effet Hall 17 pour définir une position approximative du rotor 3 permettant d'appliquer la commande appropriée lors du démarrage. Cette méthode sera décrite plus en détails dans la suite de la description. Toute autre grandeur électrique dépendant de la position du rotor 3 et permettant de déterminer la position du rotor 3 de manière à déterminer le signal d'excitation à appliquer aux bobines d'excitation lors du démarrage peut également être utilisée. Le moteur électrique 1 comprend donc des moyens de mesure d'une grandeur électrique variant en fonction de la position du rotor 3, par exemple des moyens de mesure de tension au niveau des phases du moteur électrique 1.

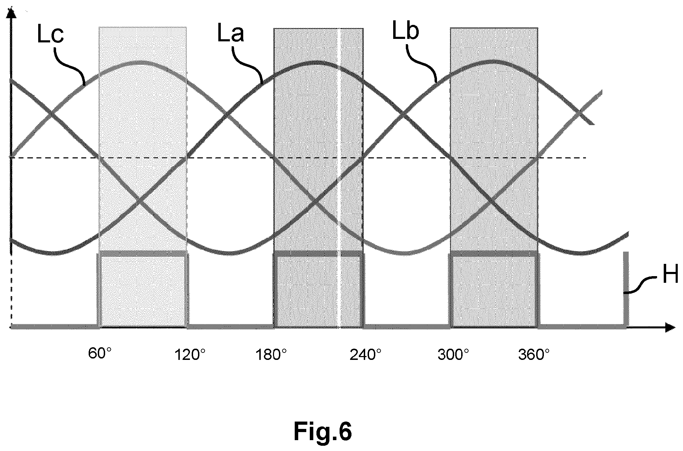

La figure 6 représente un exemple de courbe représentant les valeurs d'inductance des phases notées La, Lb et Lc en fonction de l'angle de rotation du rotor 3. Pour chaque portion angulaire du rotor 3 correspondant à un intervalle de 60° électriques, les valeurs relatives des inductances diffèrent de sorte qu'il est possible de déterminer la portion angulaire dans laquelle se trouve le rotor 3 en comparant les différentes inductances mutuelles entre elles. Le signal H fourni par le capteur à effet Hall 17 est également représenté sur la figure 6. Si le capteur à effet Hall 17 fournit un signal de niveau haut, le rotor 3 est dans l'une des trois portions angulaires correspondant à un signal de niveau haut, ici les portions angulaires 60°-120°, 180°-240° et 300°-360°. Si l'on détermine que dans cette portion angulaire l'inductance La de la phase A est supérieure aux inductances Lb et Lc des phases respectives B et C alors on peut en déduire que le rotor 3 est positionné dans la portion angulaire 180°-240° et appliquer ainsi le signal d'excitation adéquat pour entraîner le rotor 3 en rotation.

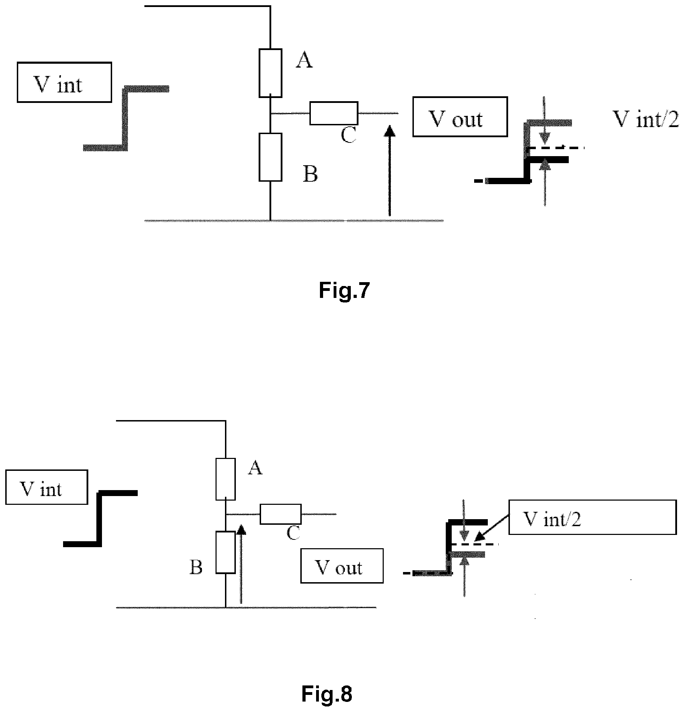

La figure 7 représente un premier mode de mesure permettant de comparer les inductances La et Lb des phases respectives A et B. Pour cela, une tension Vint est appliquée aux bornes des phases A et B et une tension Vout est mesurée entre les phases C et B. La tension mesurée Vout est ensuite comparée à la moitié de la tension Vint appliquée. Si la tension mesurée est supérieure à Vint/2 alors la valeur de l'inductance Lb de la phase B est supérieure à la valeur de l'inductance La de la phase A et si la tension mesurée est inférieure à Vint/2 alors la valeur de l'inductance Lb de la phase B est inférieure à la valeur de l'inductance La de la phase A.

Alternativement, la tension Vout peut être mesurée entre le point milieu des phases et la phase B comme représenté sur la figure 8. Comme pour le premier mode de mesure, une tension Vint est appliquée aux bornes des phases A et B et la tension mesurée Vout est ensuite comparée à la moitié de la tension Vint appliquée. Si la tension mesurée est supérieure à Vint/2 alors la valeur de l'inductance Lb de la phase B est supérieure à la valeur de l'inductance La de la phase A et si la tension mesurée est inférieure à Vint/2 alors la valeur de l'inductance Lb de la phase B est inférieure à la valeur de l'inductance La de la phase A.

De la même manière, il est également possible de comparer les valeurs des inductances La et Lc ainsi que les inductances Lb et Lc afin de déterminer la portion angulaire dans laquelle se trouve le rotor 3.

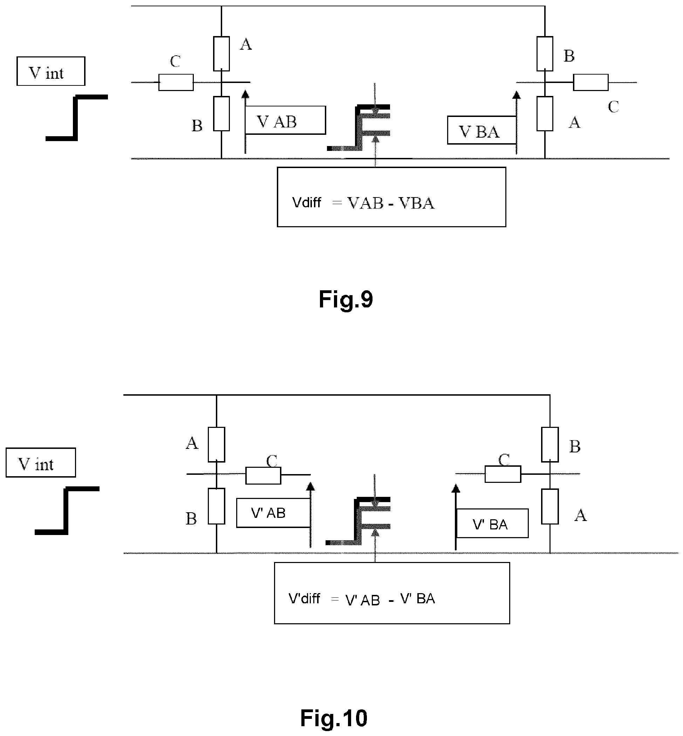

Selon un autre mode de mesure permettant de comparer les différentes inductances et représenté sur la figure 9, on applique une tension Vint entre les bornes des phases A et B et on mesure la tension Vab entre le point milieu et l'autre extrémité de la phase B puis on applique la tension Vint entre les bornes des phases B et A (on inverse la borne positive et la borne négative en modifiant la position des interrupteurs 15 de l'onduleur 10) et on mesure la tension Vba entre le point milieu et l'autre extrémité de la phase A. On calcule alors la valeur de la tension Vdiff correspondant à la différence entre la tension Vab et la tension Vba. En fonction de la valeur de la tension Vdiff, on peut en déduire la valeur relative de l'inductance LA par rapport à l'inductance LB.

Alternativement, on peut mesurer une tension V'ab entre les phases C et B et une tension V'ba entre les phases C et A comme représenté sur la figure 10. On détermine alors la tension V'diff correspondant à la différence entre la tension V'ab et la tension V'ba. En fonction de la valeur de la tension V'diff, on peut en déduire la valeur relative de l'inductance La par rapport à l'inductance Lb.

De la même manière, on peut en déduire une valeur relative entre les inductances La et Lc, et entre les inductances Lb et Lc.

De plus, la durée d'application des tensions Vint pour effectuer les mesures est choisie dans un intervalle de temps compris entre 1 et 50µs, de préférence entre 3 et 10µs, par exemple 5µs. En effet, ce temps doit être suffisamment long pour éviter que la mesure soit parasitée par les capacités des éléments du circuit de mesure et suffisamment court pour que le délai de démarrage du moteur électrique 1 ne soit pas trop impacté.

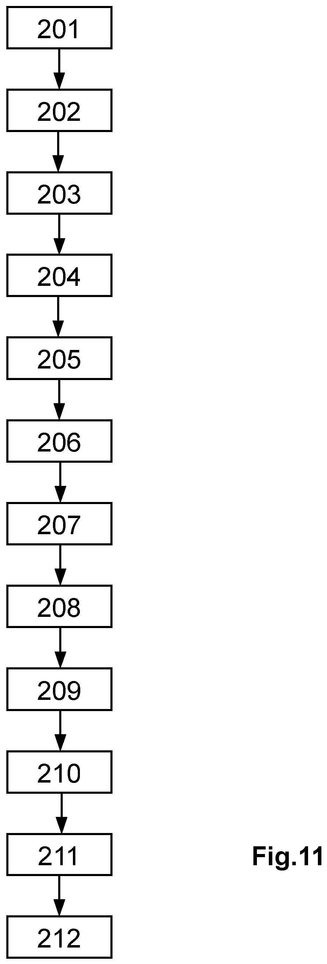

La figure 11 représente un organigramme des étapes du protocole de comparaison des inductances selon un mode de réalisation. Ces étapes sont par exemple réalisées par l'unité de commande 14.
- une première étape 201 d'application pendant 5µs d'un échelon de tension Vint entre les phases A et B, la phase A étant reliée à la borne positive de la source de tension 13 et la phase B à la borne négative de la source de tension 13.
- un deuxième étape 202 de mesure de la tension Vab entre le point milieu et la phase B,
- une troisième étape 203 correspondant à une pause de 5µs pendant laquelle aucune tension n'est appliquée,
- une quatrième étape 204 d'application pendant 5µs d'un échelon de tension Vint entre les phases B et A, la phase B étant reliée à la borne positive de la source de tension 13 et la phase A à la borne négative de la source de tension 13,
- un cinquième étape 205 de mesure de la tension Vba entre le point milieu et la phase A.
- une sixième étape 206 correspondant à une pause de 5µs pendant laquelle aucune tension n'est appliquée,
- une septième étape 207 d'application pendant 5µs d'un échelon de tension Vint entre les phases A et C, la phase A étant reliée à la borne positive de la source de tension 13 et la phase C à la borne négative de la source de tension 13,
- une huitième étape 208 de mesure de la tension Vac entre le point milieu et la phase C,
- une neuvième étape 209 correspondant à une pause de 5µs pendant laquelle aucune tension n'est appliquée,
- une dixième étape 210 d'application pendant 5µs d'un échelon de tension Vint entre les phases C et A, la phase C étant reliée à la borne positive de la source de tension 13 et la phase A à la borne négative de la source de tension 13,
- une onzième étape 211 et de mesure de la tension Vca entre le point milieu et la phase A,

Ce protocole de comparaison des inductances La, Lb et Lc permet ainsi de connaître les valeurs relatives des inductances des différentes phases A, B et C et permet ainsi de déduire la portion angulaire dans laquelle se trouve le rotor 3.

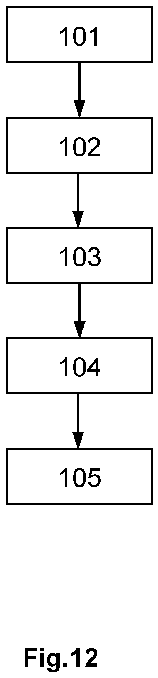

La figure 12 représente un organigramme des étapes du procédé de démarrage du moteur électrique 1. Ces étapes sont par exemple réalisées par l'unité de commande 14.

Le procédé peut comprendre des étapes préliminaires (non représentées sur la figure 12), par exemple une première étape préliminaire de détermination des signaux d'excitation à appliquer aux bobines en fonction de la position du rotor 3 pour entraîner le rotor 3 en rotation. Ce la correspond à l'établissement des signaux C1, C2 et C3 de la figure 3. Le procédé peut également comprendre une deuxième étape préliminaire de détermination des valeurs de la grandeur électrique associées à différentes positions du rotor 3, par exemple une courbe de la valeur de l'inductance d'une phase par rapport à la position du rotor 1, c'est-à dire la détermination des courbes de la figure 6.

La première étape 101 concerne la détermination de l'état du capteur à effet Hall 17. Le niveau du signal fourni par le capteur à effet Hall 17 permet de déterminer trois portions angulaires possibles concernant la position du rotor 3.

La deuxième étape 102 concerne la mesure de l'inductance d'au moins une phase du moteur électrique 1 ou la détermination des valeurs relatives des inductances des phases A, B et C du moteur électrique 1. L'étape 102 comprend par exemple les sous-étapes 201 à 212 décrites précédemment à partir de la figure 11.

La troisième étape 103 concerne la détermination de la position du rotor 3. Cette détermination est réalisée à partir des résultats des étapes 101 et 102. En effet, comme décrit précédemment, la portion angulaire dans laquelle se trouve le rotor 3 peut être déduite à partir du signal fourni par le capteur à effet Hall 17 et des valeurs relatives des inductances La, Lb et Lc des phases A, B et C. La portion angulaire dans laquelle se trouve le rotor 3 permet de déterminer le signal de commande à appliquer pour obtenir la rotation désirée du rotor 3.

La quatrième étape 104 concerne l'application d'un signal de commande prédéterminé permettant d'obtenir une mise en rotation du rotor 3 dans le sens de rotation désiré.

La cinquième étape 105 concerne l'application d'une séquence de signaux de commande, le passage d'un signal de commande à un autre étant réalisé lors du changement d'état du capteur à effet Hall 17.

Ainsi, la présente invention permet grâce à la mesure d'une grandeur électrique dépendante de la position du rotor 3, telle que l'inductance des phases A, B et C, de déterminer la position du rotor 3 au démarrage avec un seul capteur à effet Hall 17 ce qui permet de réduire le nombre de capteurs nécessaires au fonctionnement du moteur électrique 1 et ainsi de réduire le coût d'un tel moteur électrique 1.

## Revendications

1. Procédé de commande d'un moteur électrique (1) à courant continu sans balai, ledit moteur électrique (1) comprenant :
- un rotor (3) comprenant des aimants permanents (9),
- un stator (5) présentant des bobines d'excitation électromagnétique,
- un seul capteur à effet Hall (17), configuré pour détecter des positions angulaires prédéterminées du rotor (3),
- des moyens de mesure d'une inductance (La, Lb, Lc) d'au moins une des bobines ou d'une inductance mutuelle entre deux des bobines, ladite inductance (La, Lb, Lc) ou ladite inductance mutuelle variant en fonction de la position du rotor (3),
le procédé comprenant les étapes suivantes de démarrage du moteur électrique (1) :
- on mesure ladite inductance (La, Lb, Lc) ou ladite inductance mutuelle à partir des moyens de mesure (102),
- on détermine la position du rotor à partir de la valeur mesurée de l'inductance (La, Lb, Lc) ou ladite inductance mutuelle (103),
- on applique un signal d'excitation prédéterminé associé à la position du rotor déterminée (104),
- on applique ensuite une séquence prédéterminée de signaux d'excitation à chaque changement d'état du capteur à effet Hall (17) (105).

2. Procédé de commande selon la revendication 1 comprenant également :
- une première étape préliminaire de détermination des signaux d'excitation à appliquer aux bobines en fonction de la position du rotor (3) pour entraîner le rotor (3) en rotation,
- une deuxième étape préliminaire de détermination des valeurs de la grandeur électrique associées à différentes positions du rotor (3).

3. Procédé de commande selon la revendication 1 ou 2 dans lequel les bobines forment trois phases (A, B et C) disposées en étoile et dans lequel la mesure de la grandeur électrique comprend les étapes suivantes :
- on applique une tension prédéterminée entre les bobines associées à une première et une deuxième phase (A, B), on mesure la tension au niveau de la deuxième ou de la troisième phase (B, C), on compare la valeur de la tension mesurée à la moitié de la valeur de la tension appliquée et on déduit une valeur relative entre les inductances (La, Lb) associées à la première et à la deuxième phase (A, B),
- on applique une tension prédéterminée entre les bobines associées à la première et la troisième phase (A, C), on mesure la tension au niveau de la troisième ou de la deuxième phase (B, C), on compare la valeur de la tension mesurée à la moitié de la valeur de la tension appliquée et on déduit une valeur relative entre les inductances (La, Lc) associées à la première et à la troisième phase (A, C),
- on applique une tension prédéterminée entre les bobines associées à la deuxième et la troisième phase (B, C), on mesure la tension au niveau de la troisième ou de la première phase (A, C), on compare la valeur de la tension mesurée à la moitié de la valeur de la tension appliquée et on déduit une valeur relative entre les inductances (Lb, Lc) associées à la deuxième et à la troisième phase (B, C),
et dans lequel on détermine la position du rotor (3) à partir des valeurs relatives des inductances (La, Lb, Lc) associées aux différentes phases (A, B, C) et de la valeur du signal transmis par le capteur à effet Hall (17).

4. Procédé de commande selon l'une des revendications 1 ou 2 dans lequel les bobines forment trois phases (A, B, C) disposées en étoile et dans lequel la mesure de la grandeur électrique comprend les étapes suivantes :
- on applique une tension prédéterminée entre les bobines associées à une première et une deuxième phase (A, B) et on mesure une première tension au niveau de la deuxième phase (B),
- on applique la même tension prédéterminée entre les bobines associées à la première et la deuxième phase (A, B) mais avec un courant inverse et on mesure une deuxième tension au niveau de la deuxième phase (B),
- on compare les valeurs de la première et de la deuxième tension mesurée et on déduit une valeur relative des inductances (La, Lb) associées à la première et la deuxième phase (A, B),
- on applique une tension prédéterminée entre les bobines associées à la première et une troisième phase (B, C) et on mesure une troisième tension au niveau de la troisième phase (C),
- on applique la même tension prédéterminée entre les bobines associées à la première et la troisième phase (A, C) mais avec un courant inverse et on mesure une quatrième tension au niveau de la troisième phase (C),
- on compare les valeurs de la troisième et de la quatrième tension mesurée et on déduit une valeur relative des inductances (La, Lc) associées à la première et la troisième phase (A, C),
- on applique une tension prédéterminée entre les bobines associées à la deuxième et la troisième phase (B, C) et on mesure une cinquième tension au niveau de la troisième phase (C),
- on applique la même tension prédéterminée entre les bobines associées à la deuxième et la troisième phase (B, C) mais avec un courant inverse et on mesure une sixième tension au niveau de la troisième phase (C),
- on compare les valeurs de la cinquième et de la sixième tension mesurée et on déduit une valeur relative des inductances (Lb, Lc) associées à la deuxième et à la troisième phase (B, C),
et dans lequel on détermine la position du rotor (3) à partir des valeurs relatives des inductances (La, Lb, Lc) associées aux différentes phases (A, B, C) et de la valeur du signal transmis par le capteur à effet Hall (17).

5. Procédé selon la revendication 4 dans lequel la durée d'application des tensions prédéterminées est choisie dans un intervalle de temps compris entre 1 et 50µs, de préférence entre 3 et 10µs.

6. Procédé de commande selon l'une des revendications précédentes dans lequel le moteur électrique (1) comprend trois phases (A, B, C) et un cycle du rotor (3) peut être divisé en six portions angulaires associées respectivement à six signaux d'excitation, trois portions angulaires correspondant à un premier niveau de signal du capteur à effet Hall (17) et trois autres portions angulaires correspondant à un deuxième niveau de signal du capteur à effet Hall (17), la détermination de la portion angulaire, parmi les trois correspondant au signal du capteur à effet Hall (17), correspondant à la position du rotor (3) étant réalisée à partir de la mesure de la grandeur électrique.

7. Procédé de commande selon la revendication 1 comprenant six signaux d'excitation, chaque signal d'excitation correspondant à l'alimentation d'une première phase (A, B, C) par une tension positive, l'alimentation d'une deuxième phase (B, C, A) par une tension négative et une troisième phase (C, A, B) reliée à une masse ou ouverte.

8. Moteur électrique (1) à courant continu sans balai comprenant :
- un rotor (3) comprenant des aimants permanents,
- un stator (5) présentant des bobines d'excitation électromagnétique,
- un seul capteur à effet Hall (17) configuré pour détecter des positions angulaires prédéterminées du rotor (3),
- une unité de commande (14) configurée pour appliquer des signaux d'excitation prédéterminés aux bobines en fonction de la position du rotor (3) pour entraîner le rotor (3) en rotation, ladite unité de commande (14) étant également configurée lors du démarrage pour :
- mesurer une inductance (La, Lb, Lc) d'au moins une des bobines ou d'une inductance mutuelle entre deux des bobines, ladite inductance (La, Lb, Lc) ou ladite inductance mutuelle variant en fonction de la position du rotor (3) (102),
- déterminer la position du rotor (3) en fonction de la valeur de l'inductance (La, Lb, Lc) ou ladite inductance mutuelle (103),
- appliquer un signal d'excitation prédéterminé associé à la position du rotor (3) déterminée (104),
- appliquer ensuite une séquence prédéterminée de signaux d'excitation à chaque changement d'état du capteur à effet Hall (17) (105).

9. Moteur électrique (1) selon la revendication précédente dans lequel le capteur à effet Hall (17) est associé à un aimant de commande (19) couplé au rotor (3), ledit aimant de commande (19) comprenant un nombre de paire de pôles égal à trois fois le nombre de paire de pôles du moteur électrique (1).

## Patentansprüche

1. Verfahren zur Steuerung eines bürstenlosen Gleichstrommotors (1), wobei der Elektromotor (1) umfasst:
- einen Rotor (3) mit Permanentmagneten (9),
- einen Stator (5) mit elektromagnetischen Erregerspulen,
- einen einzigen Hall-Effekt-Sensor (17), der konfiguriert ist, um vorbestimmte Winkelpositionen des Rotors (3) zu erfassen,
- Mittel zur Messung einer Induktivität (La, Lb, Lc) von mindestens einer der Spulen oder einer gegenseitigen Induktivität zwischen zwei der Spulen, wobei die Induktivität (La, Lb, Lc) oder die gegenseitige Induktivität in Abhängigkeit von der Position des Rotors (3) variiert,
wobei das Verfahren die folgenden Schritte zum Starten des Elektromotors (1) umfasst:
- Messen der Induktivität (La, Lb, Lc) oder der gegenseitigen Induktivität mittels der Messmittel (102),
- Bestimmen der Position des Rotors aus dem gemessenen Wert der Induktivität (La, Lb, Lc) oder der gegenseitigen Induktivität (103),
- Anlegen eines vorbestimmten Erregungssignals, das mit der bestimmten Rotorposition verbunden ist (104),
- anschließendes Anlegen einer vorbestimmten Sequenz von Erregungssignalen bei jeder Zustandsänderung des Hall-Effekt-Sensors (17) (105).

2. Steuerungsverfahren nach Anspruch 1, das außerdem umfasst:
- einen ersten vorbereitenden Schritt zur Bestimmung der Erregungssignale, die an die Spulen in Abhängigkeit von der Position des Rotors (3) anzulegen sind, um den Rotor (3) in Rotation zu versetzen,
- einen zweiten vorbereitenden Schritt zur Bestimmung der Werte der elektrischen Größe, die mit verschiedenen Positionen des Rotors (3) verbunden sind.

3. Steuerungsverfahren nach Anspruch 1 oder 2, bei dem die Spulen drei Phasen (A, B und C) bilden, die in Sternschaltung angeordnet sind, und bei dem die Messung der elektrischen Größe die folgenden Schritte umfasst:
- Anlegen einer vorbestimmten Spannung zwischen den Spulen, die mit einer ersten und einer zweiten Phase (A, B) verbunden sind, Messen der Spannung an der zweiten oder dritten Phase (B, C), Vergleichen des Werts der gemessenen Spannung mit der Hälfte des Werts der angelegten Spannung und Ableiten eines relativen Werts zwischen den Induktivitäten (La, Lb), die mit der ersten und der zweiten Phase (A, B) verbunden sind,
- Anlegen einer vorbestimmten Spannung zwischen den Spulen, die mit der ersten und der dritten Phase (A, C) verbunden sind, Messen der Spannung an der dritten oder zweiten Phase (B, C), Vergleichen des Werts der gemessenen Spannung mit der Hälfte des Werts der angelegten Spannung und Ableiten eines relativen Werts zwischen den Induktivitäten (La, Lc), die mit der ersten und der dritten Phase (A, C) verbunden sind,
- Anlegen einer vorbestimmten Spannung zwischen den Spulen, die mit der zweiten und der dritten Phase (B, C) verbunden sind, Messen der Spannung an der dritten oder ersten Phase (A, C), Vergleichen des Werts der gemessenen Spannung mit der Hälfte des Werts der angelegten Spannung und Ableiten eines relativen Werts zwischen den Induktivitäten (Lb, Lc), die mit der zweiten und der dritten Phase (B, C) verbunden sind,
und wobei die Position des Rotors (3) aus den relativen Werten der Induktivitäten (La, Lb, Lc), die mit den verschiedenen Phasen (A, B, C) verbunden sind, und dem Wert des vom Hall-Effekt-Sensor (17) übertragenen Signals bestimmt wird.

4. Steuerungsverfahren nach einem der Ansprüche 1 oder 2, bei dem die Spulen drei Phasen (A, B, C) bilden, die in Sternschaltung angeordnet sind, und bei dem die Messung der elektrischen Größe die folgenden Schritte umfasst:
- Anlegen einer vorbestimmten Spannung zwischen den Spulen, die mit einer ersten und einer zweiten Phase (A, B) verbunden sind, und Messen einer ersten Spannung an der zweiten Phase (B),
- Anlegen derselben vorbestimmten Spannung zwischen den Spulen, die mit der ersten und der zweiten Phase (A, B) verbunden sind, jedoch mit umgekehrtem Strom, und Messen einer zweiten Spannung an der zweiten Phase (B),
- Vergleichen der Werte der ersten und der zweiten gemessenen Spannung und Ableiten eines relativen Werts der Induktivitäten (La, Lb), die mit der ersten und der zweiten Phase (A, B) verbunden sind,
- Anlegen einer vorbestimmten Spannung zwischen den Spulen, die mit der ersten und einer dritten Phase (B, C) verbunden sind, und Messen einer dritten Spannung an der dritten Phase (C),
- Anlegen derselben vorbestimmten Spannung zwischen den Spulen, die mit der ersten und der dritten Phase (A, C) verbunden sind, jedoch mit umgekehrtem Strom, und Messen einer vierten Spannung an der dritten Phase (C),
- Vergleichen der Werte der dritten und der vierten gemessenen Spannung und Ableiten eines relativen Werts der Induktivitäten (La, Lc), die mit der ersten und der dritten Phase (A, C) verbunden sind,
- Anlegen einer vorbestimmten Spannung zwischen den Spulen, die mit der zweiten und der dritten Phase (B, C) verbunden sind, und Messen einer fünften Spannung an der dritten Phase (C),
- Anlegen derselben vorbestimmten Spannung zwischen den Spulen, die mit der zweiten und der dritten Phase (B, C) verbunden sind, jedoch mit umgekehrtem Strom, und Messen einer sechsten Spannung an der dritten Phase (C),
- Vergleichen der Werte der fünften und der sechsten gemessenen Spannung und Ableiten eines relativen Werts der Induktivitäten (Lb, Lc), die mit der zweiten und der dritten Phase (B, C) verbunden sind,
und wobei die Position des Rotors (3) aus den relativen Werten der Induktivitäten (La, Lb, Lc), die mit den verschiedenen Phasen (A, B, C) verbunden sind, und dem Wert des vom Hall-Effekt-Sensor (17) übertragenen Signals bestimmt wird.

5. Verfahren nach Anspruch 4, bei dem die Dauer der Anwendung der vorbestimmten Spannungen in einem Zeitintervall zwischen 1 und 50 µs, vorzugsweise zwischen 3 und 10 µs, gewählt wird.

6. Steuerungsverfahren nach einem der vorhergehenden Ansprüche, bei dem der Elektromotor (1) drei Phasen (A, B, C) umfasst und ein Zyklus des Rotors (3) in sechs Winkelabschnitte unterteilt werden kann, die jeweils mit sechs Erregungssignalen verbunden sind, wobei drei Winkelabschnitte einem ersten Signalpegel des Hall-Effekt-Sensors (17) entsprechen und drei weitere Winkelabschnitte einem zweiten Signalpegel des Hall-Effekt-Sensors (17) entsprechen, wobei die Bestimmung des Winkelabschnitts unter den drei, die dem Signal des Hall-Effekt-Sensors (17) entsprechen, der der Position des Rotors (3) entspricht, auf der Grundlage der Messung der elektrischen Größe erfolgt.

7. Steuerungsverfahren nach Anspruch 1, das sechs Erregungssignale umfasst, wobei jedes Erregungssignal der Versorgung einer ersten Phase (A, B, C) mit einer positiven Spannung, der Versorgung einer zweiten Phase (B, C, A) mit einer negativen Spannung und einer dritten Phase (C, A, B), die mit einer Masse verbunden oder offen ist, entspricht.

8. Bürstenloser Gleichstrommotor (1), umfassend:
- einen Rotor (3) mit Permanentmagneten,
- einen Stator (5) mit elektromagnetischen Erregerspulen,
- einen einzigen Hall-Effekt-Sensor (17), der konfiguriert ist, um vorbestimmte Winkelpositionen des Rotors (3) zu erfassen,
- eine Steuereinheit (14), die konfiguriert ist, um vorbestimmte Erregungssignale an die Spulen in Abhängigkeit von der Position des Rotors (3) anzulegen, um den Rotor (3) in Rotation zu versetzen, wobei die Steuereinheit (14) auch konfiguriert ist, beim Start:
- eine Induktivität (La, Lb, Lc) von mindestens einer der Spulen oder eine gegenseitige Induktivität zwischen zwei der Spulen zu messen, wobei die Induktivität (La, Lb, Lc) oder die gegenseitige Induktivität in Abhängigkeit von der Position des Rotors (3) variiert (102),
- die Position des Rotors (3) in Abhängigkeit vom Wert der Induktivität (La, Lb, Lc) oder der gegenseitigen Induktivität zu bestimmen (103),
- ein vorbestimmtes Erregungssignal anzulegen, das mit der bestimmten Position des Rotors (3) verbunden ist (104),
- anschließend eine vorbestimmte Sequenz von Erregungssignalen bei jeder Zustandsänderung des Hall-Effekt-Sensors (17) anzulegen (105).

9. Elektromotor (1) nach dem vorhergehenden Anspruch, bei dem der Hall-Effekt-Sensor (17) mit einem Steuermagnet (19) verbunden ist, der mit dem Rotor (3) gekoppelt ist, wobei der Steuermagnet (19) eine Anzahl von Polpaaren aufweist, die gleich dem Dreifachen der Anzahl der Polpaare des Elektromotors (1) ist.

## Claims

1. Method for controlling a brushless direct current electric motor (1), said electric motor (1) comprising:
- a rotor (3) comprising permanent magnets (9),
- a stator (5) having electromagnetic excitation coils,
- a single Hall effect sensor (17), configured to detect predetermined angular positions of the rotor (3),
- means for measuring an inductance (La, Lb, Lc) of at least one of the coils or a mutual inductance between two of the coils, said inductance (La, Lb, Lc) or said mutual inductance varying according to the position of the rotor (3),
the method comprising the following steps for starting the electric motor (1):
- measuring said inductance (La, Lb, Lc) or said mutual inductance from the measuring means (102),
- determining the position of the rotor from the measured value of the inductance (La, Lb, Lc) or said mutual inductance (103),
- applying a predetermined excitation signal associated with the determined rotor position (104),
- subsequently applying a predetermined sequence of excitation signals at each state change of the Hall effect sensor (17) (105).

2. Control method according to claim 1 also comprising:
- a first preliminary step of determining the excitation signals to be applied to the coils according to the position of the rotor (3) to drive the rotor (3) in rotation,
- a second preliminary step of determining the values of the electrical quantity associated with different positions of the rotor (3).

3. Control method according to claim 1 or 2 wherein the coils form three phases (A, B and C) arranged in a star configuration and wherein the measurement of the electrical quantity comprises the following steps:
- applying a predetermined voltage between the coils associated with a first and a second phase (A, B), measuring the voltage at the level of the second or third phase (B, C), comparing the value of the measured voltage to half the value of the applied voltage and deducing a relative value between the inductances (La, Lb) associated with the first and second phase (A, B),
- applying a predetermined voltage between the coils associated with the first and third phase (A, C), measuring the voltage at the level of the third or second phase (B, C), comparing the value of the measured voltage to half the value of the applied voltage and deducing a relative value between the inductances (La, Lc) associated with the first and third phase (A, C),
- applying a predetermined voltage between the coils associated with the second and third phase (B, C), measuring the voltage at the level of the third or first phase (A, C), comparing the value of the measured voltage to half the value of the applied voltage and deducing a relative value between the inductances (Lb, Lc) associated with the second and third phase (B, C),
and wherein the position of the rotor (3) is determined from the relative values of the inductances (La, Lb, Lc) associated with the different phases (A, B, C) and the value of the signal transmitted by the Hall effect sensor (17).

4. Control method according to one of claims 1 or 2 wherein the coils form three phases (A, B, C) arranged in a star configuration and wherein the measurement of the electrical quantity comprises the following steps:
- applying a predetermined voltage between the coils associated with a first and a second phase (A, B) and measuring a first voltage at the level of the second phase (B),
- applying the same predetermined voltage between the coils associated with the first and second phase (A, B) but with a reverse current and measuring a second voltage at the level of the second phase (B),
- comparing the values of the first and second measured voltage and deducing a relative value of the inductances (La, Lb) associated with the first and second phase (A, B),
- applying a predetermined voltage between the coils associated with the first and a third phase (B, C) and measuring a third voltage at the level of the third phase (C),
- applying the same predetermined voltage between the coils associated with the first and third phase (A, C) but with a reverse current and measuring a fourth voltage at the level of the third phase (C),
- comparing the values of the third and fourth measured voltage and deducing a relative value of the inductances (La, Lc) associated with the first and third phase (A, C),
- applying a predetermined voltage between the coils associated with the second and third phase (B, C) and measuring a fifth voltage at the level of the third phase (C),
- applying the same predetermined voltage between the coils associated with the second and third phase (B, C) but with a reverse current and measuring a sixth voltage at the level of the third phase (C),
- comparing the values of the fifth and sixth measured voltage and deducing a relative value of the inductances (Lb, Lc) associated with the second and third phase (B, C),
and wherein the position of the rotor (3) is determined from the relative values of the inductances (La, Lb, Lc) associated with the different phases (A, B, C) and the value of the signal transmitted by the Hall effect sensor (17).

5. Method according to claim 4 wherein the duration of application of the predetermined voltages is chosen in a time interval between 1 and 50us, preferably between 3 and 10µs.

6. Control method according to one of the preceding claims wherein the electric motor (1) comprises three phases (A, B, C) and a cycle of the rotor (3) can be divided into six angular portions associated respectively with six excitation signals, three angular portions corresponding to a first signal level of the Hall effect sensor (17) and three other angular portions corresponding to a second signal level of the Hall effect sensor (17), the determination of the angular portion, among the three corresponding to the signal of the Hall effect sensor (17), corresponding to the position of the rotor (3) being carried out from the measurement of the electrical quantity.

7. Control method according to claim 1 comprising six excitation signals, each excitation signal corresponding to the supply of a first phase (A, B, C) with a positive voltage, the supply of a second phase (B, C, A) with a negative voltage and a third phase (C, A, B) connected to a ground or open.

8. Brushless direct current electric motor (1) comprising:
- a rotor (3) comprising permanent magnets,
- a stator (5) having electromagnetic excitation coils,
- a single Hall effect sensor (17) configured to detect predetermined angular positions of the rotor (3),
- a control unit (14) configured to apply predetermined excitation signals to the coils according to the position of the rotor (3) to drive the rotor (3) in rotation, said control unit (14) being also configured during startup to:
- measure an inductance (La, Lb, Lc) of at least one of the coils or a mutual inductance between two of the coils, said inductance (La, Lb, Lc) or said mutual inductance varying according to the position of the rotor (3) (102),
- determine the position of the rotor (3) according to the value of the inductance (La, Lb, Lc) or said mutual inductance (103),
- apply a predetermined excitation signal associated with the determined position of the rotor (3) (104),
- subsequently apply a predetermined sequence of excitation signals at each state change of the Hall effect sensor (17) (105).

9. Electric motor (1) according to the preceding claim wherein the Hall effect sensor (17) is associated with a control magnet (19) coupled to the rotor (3), said control magnet (19) comprising a number of pole pairs equal to three times the number of pole pairs of the electric motor (1).
